**Europäisches Patentamt**

**European Patent Office**

**Office européen des brevets**

(19)

(11) Publication number: **0 015 046**
**B1**

(12)

# EUROPEAN PATENT SPECIFICATION

(45) Date of publication of patent specification: **20.10.82**

(51) Int. Cl.³: **G 02 B 5/14**

(21) Application number: **80300055.3**

(22) Date of filing: **07.01.80**

(54) Optical waveguide connector.

(30) Priority: **26.02.79 US 15565**

(43) Date of publication of application:
**03.09.80 Bulletin 80/18**

(45) Publication of the grant of the patent:
**20.10.82 Bulletin 82/42**

(84) Designated Contracting States:
**DE FR GB IT NL**

(56) References cited:
**GB - A - 2 006 457**
**GB - A - 2 017 959**
**US - A - 4 019 241**
**US - A - 4 094 580**

(73) Proprietor: **AMP INCORPORATED**
**Eisenhower Boulevard**
**Harrisburg, Pennsylvania (US)**

(72) Inventor: **Johnson, Tore Rudolph**
**2412 Jericho Drive**
**Harrisburg, Pennsylvania (US)**

(74) Representative: **Gray, Robin Oliver et al,**
**20 Queensmere Slough**
**Berkshire, SL1 1YZ (GB)**

Courier Press, Leamington Spa, England.

## Optical Waveguide Connector

This invention concerns an optical waveguide connector of the kind comprising a connector body supporting three rods engaging to define an interstitial space between them for receiving a waveguide.

Such a connector is disclosed in US patent 4,087,155 in which two connectors are disposed within a common sleeve in an attempt to align the respective waveguides.

In such connectors some difficulties may arise due to varying waveguide fibre diameter and difficulties of entering a waveguide fibre into the interstitial space. This may result in ill aligned waveguides.

US—A—4,019,241 discloses in an optical waveguide connector the use of rods of different outer diameters, and the use of one rod shorter than the other two to facilitate insertion of optical fibres.

It is an object of the invention to provide a connector capable of receiving a waveguide within a wide tolerance range with a free fit in the interstitial space and adapted to allow for reduction of the cross-section of the interstitial space over a mating zone of complementary connectors to obtain gripping of the abutted waveguides at common alignment surfaces.

A connector according to the present invention is characterised in that two of the rods have diameters larger than that of the third rod, the third rod projecting forwardly of the other rods at a mating face of the connector, and one of the other rods terminating at its forward end intermediate a forward end of the other and the forward end of the smaller rod.

Such a connector may be engaged with a similar connector in a first condition in which the ones of the enlarged diameter rods abut in coaxial arrangement with the smaller diameter rods in overlapping spaced relation, and may then be rotated relative to the similar connector about the axis of the abutted ones of the enlarged diameter rods to a second condition to bring the overlapping smaller diameter rods closer together to reduce the interstitial space defined between the overlapping lengths of the smaller diameter rods and the abutted rods. This provides for waveguide fibres which can be freely inserted in the connector interstitial spaces, and terminated with ends flush with respective ones of the enlarged diameter rods, being clamped in the second condition between the overlapping smaller diameter rods and the abutted coaxial ones of the larger diameter rods which clamping rods define alignment surfaces for clamping and aligning the waveguide fibres with precision.

The invention will now be described, by way of example, with reference to the accompanying partly diagrammatic drawings, in which:—

Figure 1 is a schematic perspective view of parts of two mating connectors prior to mating engagement;

Figure 2 is a view similar to that of Figure 1 but with the connector parts in a preliminary position of engagement;

Figure 2A is a transverse section taken on the line 2A—2A of Figure 2 and viewed in the direction of the arrows;

Figure 3 is a view similar to that of Figure 2 but with the connector parts finally engaged;

Figure 3A is a transverse section taken on line 3A—3A of Figure 3;

Figure 4 is a view similar to that of Figure 1 but of a working embodiment;

Figure 5 is a view similar to that of Figure 2 of the embodiment of Figure 4;

Figure 5A is a section taken on the line 5A—5A of Figure 5 and viewed in the direction of the arrows;

Figure 6 is a view similar to that of Figure 3 of the embodiment of Figure 4, and

Figure 6A is a section taken on the line 6A—6A of Figure 6 viewed in the direction of the arrows.

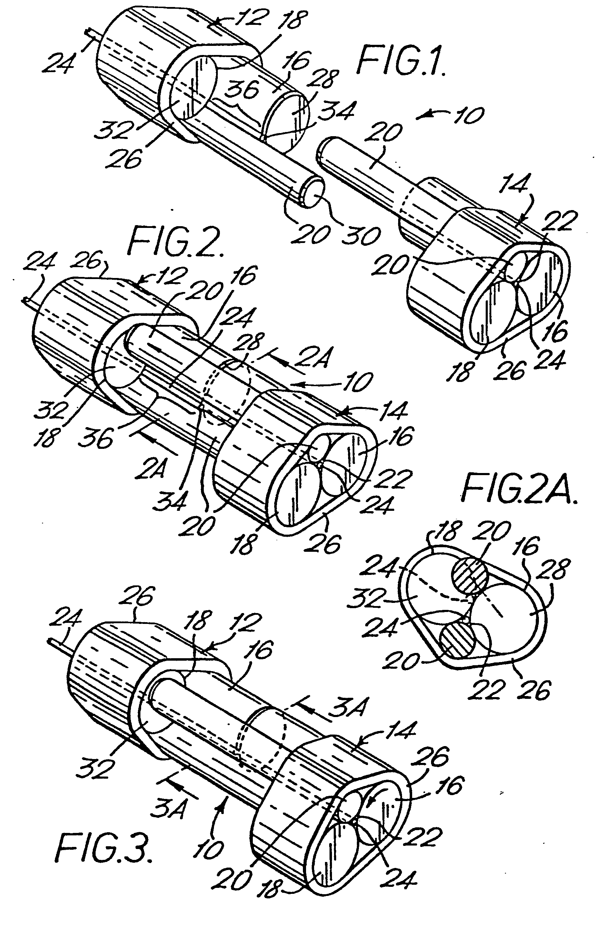

The essential principles of the invention will first be described with reference to the schematic drawings of Figures 1 to 3 before describing Figures 4 to 6 which embody those principles in a working example.

The two-part connector assembly 10 of Figures 1 to 3 comprises two identical connector parts 12 and 14 each including three parallel elongate rods 16, 18 and 20 cooperating to define an elongate interstitial passageway 22 between them. The rods 16 and 18 are of equal diameter which is substantially larger than the diameter of the third rod 20, and each of the rods is of a rigid material. At rear ends of the connector parts 12 and 14 the rods 16, 18 and 20 terminate in coplanar fashion, but at forward, engaging ends, the rods 16, 18 and 20 terminate in axially staggered fashion with the end of rod 16 terminating at a face 28 mid-way between the rearward end face 32 of rod 18, and the forward end face 30 of the rod 20.

Each connector part 12 and 14 terminates a respective optical waveguide 24 extending from the rear of the connector through the interstitial space 22 within which it is a free fit, to terminate flush with the intermediate rod face 28 at an end 34. The waveguides 24 are suitably secured within the interstitial passageway 22 defined by portions of three rods in each part 12 and 14 by means of epoxy. In each part 12 and 14 a forward portion 36 of the waveguide 24 is cradled between the projecting portions of rods 16 and 20.

In mating the connector parts 12 and 14 the rods 16 are positioned in coaxial relationship, with the rod 20 of one part generally aligned with but axially offset from the rod 18 of the other part. The connector parts 12 and 14 are then moved together into the condition of Figures 2 and 2A where rod faces 28 of rods 16 engage in coaxial relation and the rods 20 overlap in spaced relationship with their end faces 30 respectively engaging faces 32 of the complementary rods 18. In this condition, the waveguides 24 are axially misaligned as evident from Figure 2A.

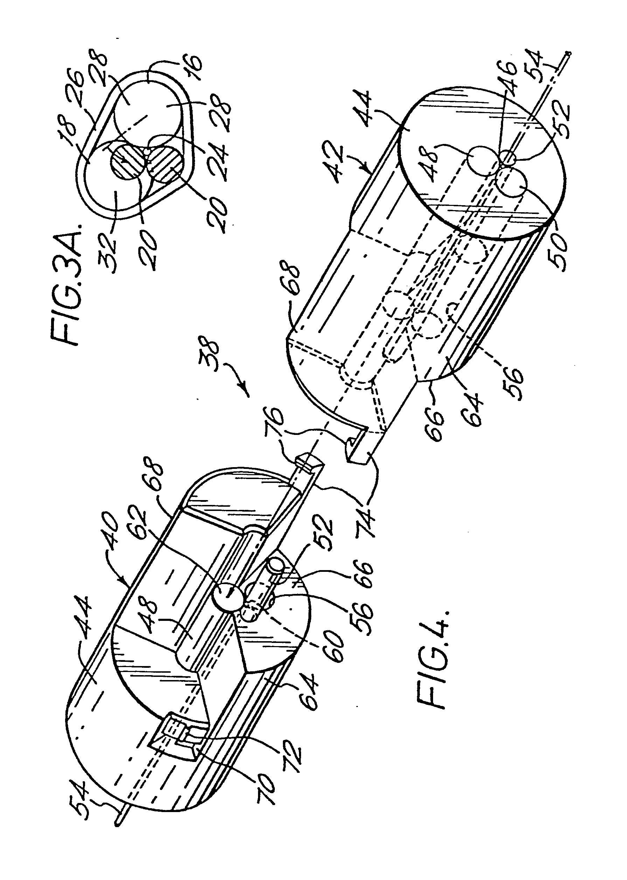

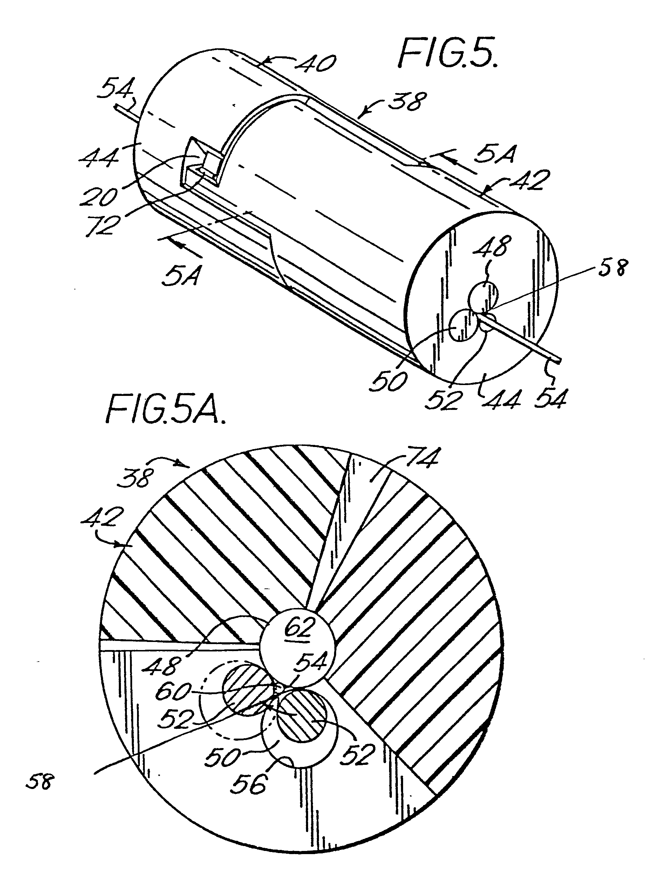

From the condition of Figures 2 and 2A the connector parts 12 and 14 are relatively oppositely rotated about the common axis of the rods 16, as generally indicated by an arrow in Figure 3A, moving the overlapping rods 20 towards each other until both of the waveguide ends are clamped between the rods 20 and the abutting rods 16, with each of the rods 20 of smaller diameter engaging both of the waveguide portions 36. This brings the inner ends 34 of the waveguides 24 into facing relationship with the portions 36 coaxially aligned to a high degree of precision with consequent advantageous optical coupling.

It will be appreciated that the schematic arrangement of Figures 1 to 3 will, for practical utilisation, require means to secure the connectors parts 12 and 14 in their relative mated condition of Figures 3 and 3A, and a preferred working embodiment will now be described with reference to Figures 4 to 6.

The connector assembly of Figures 4 to 6 includes two identical, hermaphroditic connector bodies 40 and 42, each comprising a moulded cylindrical housing 44 formed with an axially extending through-passageway 46 defined by three communicating bores, two being of equal diameter and the third of smaller diameter, the bores receive rods 48, 50 and 52 arranged as described above in relation to rods. 16, 18 and 20 of Figures 1 to 3, with the rod 48 coaxial with the housing. A forward portion 56 of the bore associated with rod 50 is of enlarged diameter compared with a rearward portion which contains the rod 50.

The rods 48, 50 and 52 define between them an interstitial passageway 58 for receiving a waveguide 54 secured by epoxy as described with reference to the embodiment of Figures 1 to 3, with a forward end surface 60 of the waveguide terminating at and coplanar with a forward end surface 62 of the associated rod 48 which terminates mid-way between the rearwardly positioned forward end face of rod 50 and the forward end face of the rod 52.

Each housing 44 is formed with a stepped forward portion projecting within the cylindrical form from a rear cylindrical section.

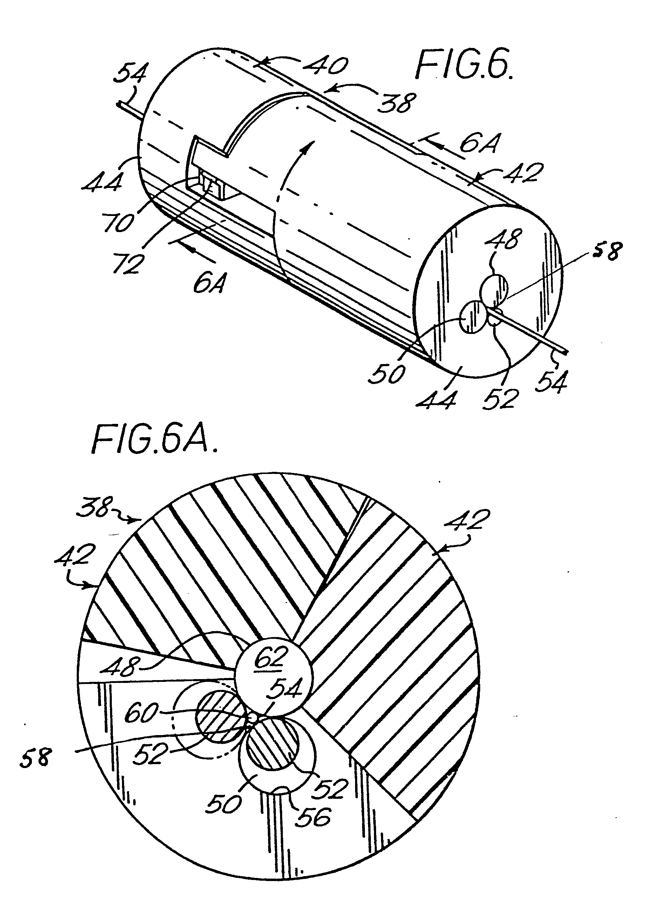

An intermediate section comprises a first sectional extension 64 of the rear portion 44 of 120° angular extent embracing the rod 62 and the adjacent enlarged bore portion 56, and terminating at a forward surface 66, flush with the forward end of rod 62, integral with a second sectional extension 68. The extension 68 is of less than 120° angular extent and extends on a side of the rods 48 and 50 opposite to the rod 52, forwardly of the rod 48 and surface 66 to terminate level with the forward end surface of the rod 52. A sectional space extends between the first and second extensions 64 and 68 on a side of the rods 48 and 52 opposite the rod 50, of angular extent greater than 120°, and adapted to receive the second extension 68 of the complementary housing in a free angular fit as seen in Figures 5A and 6A.

Each housing 44 is formed at the rear of the intermediate section with a latch recess 70 extending arcuately and bisected at its forward side by a rib 72 extending axially. The second extension 68 is formed at a side adjacent the first extension 64 with a forwardly extending, resilient latch arm 74 having a head 76 adapted to engage the recess 70 of the complementary housing on either side of the rib 72.

The shortest of the three rods, 50, in each housing terminates within the housing at the rear of the enlarged passageway portion.

In making engagement of the connectors from the Figure 4 condition, the housings are positioned with the rods 48 in axial alignment and moved together to engage the second extensions 68 in the complementary sectional spaces of the other housing parts to register the latch heads 76 in the latch recesses 70 with the latch arms 74 engaged between the ribs 72 and the adjacent surface of the first extension 64, as shown in Figures 5 and 5A. As seen in Figure 5A, the second extensions 68 of the housing 40 and 42 are separated by an acute angled sector space 74 between them, and the rods 52 are spaced apart. Each rod 52, in its portion projecting forwardly from the associated second section 64, extends into the enlarged diameter bore portion 56 of the other housing. In this condition the waveguide ends 60 are spaced apart.

The housings are then relatively rotated to move the latch arms 74 over the ribs 72, and away from the adjacent first extensions 64, to the position shown in Figures 6 and 6A. As indicated by an arcuate arrow in Figure 5A, the rods 52 move together about the common axis of the rods 48 to clamp the waveguides 54 between the overlapping rods 52 and the abutted rods 48 to bring the waveguides into end abutting axial relationship.

The enlarged bore portions 56 permit the necessary movement of the rods 52 to reduce the interstitial space and permit the clamping as shown in Figure 6A.

## Claims

1. An optical waveguide connector comprising a connector body supporting three rods engaging to define an interstitial space between them for receiving a waveguide characterised in that two of the rods (16, 18 or

0015046

48, 50) have diameters larger than that of the third rod (20 or 52), the third rod (20 or 52) projecting forwardly of the other rods (16, 18 or 48, 50) at a mating face of the connector, and one (16 or 48) of the other rods terminating at its forward end (28 or 62) intermediate the forward end of the other (18 or 50) and the forward end of the smaller rod (20 or 52).

2. An optical waveguide connector as claimed in claim 1, characterised by a waveguide (24 or 54) of smaller cross-section than that of the interstitial space (22 or 58), extending through the space (22 or 58) forwardly from a rear end and terminating flush with the forward end (28 or 62) of the one (16 or 48) of the other rods (16, 18 or 48, 50), that portion of the waveguide (24 or 54) within the interstitial space portion bounded by the three rods (16, 18, 20 or 48, 50, 52) being secured by adhesive material.

3. A connector as claimed in claim 1 or in claim 2 characterised in that the body is generally cylindrical and has first (64) and second (68) extensions extending forwardly from adjacent the forward end of the other (50) of the other rods (48, 50), the first extension (64) being of sectorial section centred at the axis of the one (48) of the other rods (48, 50) and the second extension (68) being contiguous with the first extension (64) and of sectorial section centred at the axis of the one (48) of the other rods (48, 50), the smaller diameter rod (52) projecting forwardly from the first extension (64) which contains a bore (56) extending into the body where it accommodates the forward face of the other (50) of the other rods (48, 50), the second extension (68) terminating at its forward end level with the forward end of the smaller diameter rod (52), a sector space between the first and second extensions (64, 68) being of greater arc than that of the second extension (68).

4. A connector as claimed in claim 3, characterised by a latch recess (70) at a rear of the first extension (64) and a resilient latch arm (74) projecting forwardly of the second extension (68) at a side adjacent the first extension (64), the latch recess (70) being divided by a rib (72) into circumferentially spaced latch positions whereby the connector (40) is engageable with an identical connector (42) in a first condition (Figure 5) with the latches (74) of the connectors on first sides of the complementary ribs (72) and the connectors are relatively rotatable about a comon axis defined by the ones (48) of the other rods (48, 50) to reduce the spacing between overlapping portions of the smaller diameter rods (52) and clamp abutted waveguide ends (60) between the overlapping portions (52) and the coaxially abutted ones (48) of the other rods (48, 50).

5. A connector as claimed in claim 3 or in claim 4, characterised in that the bore portion (56) forwardly of its associated rod (50) is of enlarged diameter relative to the rod (50).

## Patentansprüche

1. Verbinder für optische Wellenleiter, mit einem Verbinderkörper, der drei Stäbe trägt, die aneinander angreifen, um zwischen sich einen Zwischenraum zur Aufnahme eines Wellenleiters zu bilden, dadurch gekennzeichnet, daß zwei der Stäbe (16, 18 oder 48, 50) Durchmesser aufweisen, die größer sind als derjenige des dritten Stabes (20 oder 52), daß der dritte Stab (20 oder 52) an einer Anschlußfläche des Verbinders von den anderen Stäben (16, 18 oder 48, 50) nach vorne vorsteht, und daß das andere Ende (28 oder 62) eines (16 oder 48) der anderen Stäbe zwischen dem vorderen Ende des anderen (18 oder 50) und dem vorderen Ende des dünneren Stabes (20 oder 52) endet.

2. Verbinder für optische Wellenleiter nach Anspruch 1, gekennzeichnet durch einen Wellenleiter (24 oder 54), der einen Querschnitt aufweist, der kleiner ist als der des Zwischenraums (22 oder 58) und der sich durch den Raum (22 oder 58) von einem rückwärtigen Ende nach vorne erstreckt und auf der Höhe des vorderen Endes (28 oder 62) des einen (16 oder 48) der anderen Stäße (16, 18 oder 48, 50) endet, wobei derjenige Teil des Wellenleiters (24 oder 54), der sich innerhalb des durch die drei Stäbe (16, 18, 20 oder 48, 50, 52) begrenzten Zwischenraums befindet, durch ein Klebematerial festgelegt ist.

3. Verbinder nach Anspruch 1 oder 2, dadurch gekennzeichnet, daß der Körper im wesentlichen zylindrisch ausgebildet ist und einen ersten (64) und einen zweiten (68) Fortsatz aufweist, die sich von der Nähe des vorderen Endes des anderen (50) der anderen Stäbe (48, 50) nach vorne erstrecken, daß der erste Fortsatz (64) im Schnitt einen Sektor darstellt, der sein Zentrum an der Achse des einen (48) der anderen Stäbe (48, 50) hat, und der zweite Fortsatz (68) sich an den ersten Fortsatz (64) anschließt und im Schnitt einen Sektor darstellt, der sein Zentrum an der Achse des einen (48) der anderen Stäbe (48, 50) hat, daß der Stab (52) kleineren Durchmessers von dem ersten Fortsatz (64) nach vorne vorsteht, der eine Bohrung (56) enthält, die sich in den Körper hinein erstreckt, wo sie die vordere Stirnfläche des anderen (50) der anderen Stäbe (48, 50) aufnimmt, daß das vordere Ende des zweiten Fortsatzes (68) auf der Höhe des vorderen Endes des Stabes (52) kleineren Durchmessers endet, und daß ein Sektorraum zwischen dem ersten und dem zweiten Fortsatz (64, 68) einen Kreisbogen beschreibt, der größer ist als der des zweiten Fortsatzes (68).

4. Verbinder nach Anspruch 3, gekennzeichnet durch eine Verriegelungsvertiefung (70) an einem rückwärtigen Bereich des ersten Fortsatzes (64) und durch einen federnd nachgiebigen Verriegelungsarm (74), der von dem zweiten Fortsatz (68) an einer an den ersten Fortsatz (64) angrenzenden Seite nach vorne vorsteht, wobei die Verriegelungsvertiefung (70) durch eine Rippe (72) in umfangsmäßig beabstandete Verriegelungspositionen unterteilt ist, wodurch der Verbinder (40) in einem ersten Zustand (Fig. 5) mit einem identischen Verbinder (42) in Eingriff bringbar ist, wobei die Verriegelungselemente (74) der Verbinder auf ersten Seiten der komplementären Rippen (72) liegen, und die Verbinder relativ zueinander um eine gemeinsame Achse, die durch die einen (48) der anderen Stäbe (48, 50) definiert ist, drehbar sind, um den Abstand zwischen überlappenden Bereichen der Stäbe (52) kleineren Durchmessers zu reduzieren und aneinander anstoßende Wellenleiterenden (60) zwischen den überlappenden Bereichen (52) und den koaxial aneinander anstoßenden (48) den anderen Stäbe (48, 50) einzuklemmen.

5. Verbinder nach Anspruch 3 oder 4, dadurch gekennzeichnet, daß der Bohrungsbereich (56), der sich von dem ihm zugeordneten Stab (50) nach vorne erstreckt, gegenüber dem Stab (50) einen vergrößerten Durchmesser aufweist.

## Revendications

1. Connecteur de guides d'ondes optiques comprenant un corps de connecteur supportant trois tiges s'enclenchant pour définir un espace interstitiel entre elles afin de recevoir un guide d'ondes, caractérisé en ce que deux des tiges (16, 18 ou 48, 50) ont des diamètres supérieurs à celui de la troisième tige (20 ou 52), la troisième tige (20 ou 52) faisant saillie vers l'avant des autres tiges (16, 18 ou 48, 50) à une surface d'accouplement du connecteur, et une première (16 ou 48) des autres tiges aboutissant à son extrémité avant (28 ou 62) entre l'extrémité avant de la seconde (18 ou 50) et l'extrémité avant de la tige plus petite (20 ou 52).

2. Connecteur de guides d'ondes optiques selon la revendication 1, caractérisé par un guide d'ondes (24 ou 54) de section inférieure à celle de l'espace interstitiel (22 ou 58), faisant saillie à travers l'espace (22 ou 58) en avant d'une extrémité arrière et aboutissant à fleur de l'extrémité avant (28 ou 62) de la première (16 ou 48) des autres tiges (16, 18 ou 48, 50), le tronçon du guide d'ondes (24 ou 54) à l'intérieur de la partie de l'espace interstitiel délimitée par les trois tiges (16, 18, 20 ou 48, 50, 52) étant fixé par une matière adhésive.

3. Connecteur selon la revendication 1 ou la revendication 2, caractérisé en ce que le corps est sensiblement cylindrique et comporte des premier (64) et second (68) prolongements faisant saillie vers l'avant d'à côté de l'extrémité avant de la seconde (50) des autres tiges (48, 50) le premier prolongement (64) étant une section en forme de secteur centrée sur l'axe de la première (48) des autres tiges (48, 50) et le second prolongement (68) étant contigu au premier prolongement (64) et d'une section en secteur centrée sur l'axe de la première (48) des autres tiges (48, 50), la tige (52) de plus faible diamètre faisant saillie vers l'avant du premier prolongement (64) qui contient un alésage (56) pénétrant dans le corps où il reçoit la face avant de la seconde (50) des autres tiges (48, 50), le second prolongement (68) aboutissant, à son extrémité avant, au niveau de l'extrémité avant de la tige (52) de plus faible diamètre, un espace en forme de secteur compris entre les premier et second prolongements (64, 68) étant d'un arc supérieur à celui du second prolongement (68).

4. Connecteur selon la revendication 3, caractérisé par un évidement (70) de verrouillage en arrière du premier prolongement (64) et un bras élastique (74) de verrouillage faisant saillie vers l'avant du second prolongement (68), sur un côté adjacent au premier prolongement (64), l'évidement (70) de verrouillage étant divisé par une nervure (72) en positions de verrouillage espacées circonférentiellement de manière que le connecteur (40) puisse être enclenché avec un connecteur identique (42) dans une première condition (figure 5), les verrous (74) des connecteurs étant sur des premiers côtés des nervures complémentaires (72), et les connecteurs pouvant être tournés mutuellement autour d'un axe commun défini par les premières (48) des autres tiges (48, 50) pour réduire l'écartement entre les tronçons se chevauchant des tiges (52) de plus faible diamètre et serrer les extrémités (60) des guides d'ondes aboutées entre les tronçons se chevauchant (52) et les premières (48), aboutées coaxialement, des autres tiges (48, 50).

5. Connecteur selon la revendication 3 ou la revendication 4, caractérisé en ce que tronçon d'alésage (56) fixé en avant de sa tige associé (50) est d'un diamètre agrandi par rapport à la tige (50).

FIG.1.

FIG.2.

FIG.2A.

FIG.3.

FIG.3A.

FIG.4.

FIG.5.

FIG.5A.

FIG.6.

FIG.6A.